# EUROPEAN PATENT APPLICATION

(11) **EP 4 489 110 A1**
(43) Date of publication of application: **08.01.2025**
(21) Application number: 24177355.5
(22) Date of filing: 22.05.2024
(51) Int. Cl.: H01M 4/134, H01M 4/38, H01M 4/62, H01M 4/66, H01M 10/04, H01M 10/0562, H01M 10/0585, H01M 10/0525

(54) **SOLID-STATE BATTERY AND METHOD OF MANUFACTURING SOLID-STATE BATTERY**

(30) Priority: 04.07.2023 JP 2023110341
(71) Applicant: TOYOTA JIDOSHA KABUSHIKI KAISHA, Aichi-ken 471-8571 (JP)
(72) Inventor: MATSUYAMA, Takuya, Toyota-shi, 471-8571 (JP)
(74) Representative: D Young & Co LLP

(57) **Abstract**

A solid-state battery includes an electrode, and the electrode includes: a resin current collector including a resin and a conductive material; an active material layer including an active material; and an intermediate layer disposed between the active material layer and the resin current collector and in which at least one component included in the active material layer and at least one component included in the resin current collector are present in a mixed state.

## Description

### BACKGROUND

### Technical Field

The present disclosure relates to a solid-state battery and a method of manufacturing a solid-state battery.

### Related Art

In recent years, secondary batteries such as lithium-ion secondary batteries have been suitably used as portable power sources for personal computers and mobile devices and as power sources for driving vehicles such as electric vehicles (EV), hybrid vehicles (HV), and plug-in hybrid vehicles (PHV).

Secondary batteries use an electrolyte solution including a flammable organic solvent, so it is necessary to install a safety device to keep the temperature of the battery from rising in the event of a short-circuit and to improve structures and materials for preventing short-circuits. In contrast, solid-state batteries, in which the electrolyte solution is replaced with a solid-state electrolyte layer so that the material is solidified, do not use a flammable organic solvent inside the battery, so the safety device can be simplified and the batteries are considered to have excellent properties with respect to manufacturing costs and productivity.

Current collectors in conventional solid-state batteries employ a single-layer structure formed of a ceramic foil or a metal foil or a laminated body including a ceramic foil and a metal foil (e.g., Japanese Patent Application Laid-open (JP-A) No. 2007-329004).

### SUMMARY

However, in conventional solid-state batteries equipped with current collectors including a ceramic foil and/or a metal foil, when the active material layer expands or contracts due to a sudden increase or a release of the active material during the charge-discharge process, sometimes a phenomenon occurs where the active material layer delaminates from the current collector. As a result, sometimes cycle characteristics (e.g., capacity retention rate after 50 cycles) are reduced.

Thus, in view of the above circumstances, the present disclosure addresses provision of a solid-state battery and a method of manufacturing a solid-state battery that curb a deterioration in cycle characteristics.

Aspects according to the present disclosure for providing such a solid-state battery and such a manufacturing method include the following aspects.
<1> A solid-state battery, including an electrode, the electrode including:
   a resin current collector including a resin and a conductive material,
   an active material layer including an active material, and
   an intermediate layer disposed between the active material layer and the resin current collector and in which at least one component included in the active material layer and at least one component included in the resin current collector are present in a mixed state.
<2> The solid-state battery according to <1>, wherein the thickness of the intermediate layer relative to the thickness of the resin current collector (intermediate layer / resin current collector) is from 1/30 to 1/6.
<3> The solid-state battery according to <1> or <2>, wherein the active material includes an Si-based active material.
<4> The solid-state battery according any one of <1> to <3>, wherein the coefficient of linear thermal expansion of the resin current collector is from 200×10⁻⁶ ppm/K to 350×10⁻⁶ ppm/K.
<5> The solid-state battery according any one of <1> to <4>, further comprising a solid-state electrolyte layer including a solid-state electrolyte, wherein the softening temperature of the resin is equal to or lower than the crystallization temperature of the solid-state electrolyte.
<6> The solid-state battery according any one of <1> to <5>, wherein the conductive material includes vapor-grown carbon fiber (VGCF).
<7> A method of manufacturing a solid-state battery, the method including:
   a step of preparing an electrode by pressing a stacked body, in which a resin current collector including a thermoplastic resin and a conductive material and an active material layer including an active material are stacked, at a temperature equal to or higher than the softening temperature of the thermoplastic resin.

According to the present disclosure, provided are a solid-state battery and a method of manufacturing a solid-state battery that curb a deterioration in cycle characteristics.

### BRIEF DESCRIPTION OF THE DRAWINGS

FIG. 1 is a cross-sectional view showing an embodiment of a solid-state battery according to the present disclosure;
FIG. 2 is a graph showing the relationship between confining pressure change indices and charging amounts in Example 1 and Comparative Example 1;
FIG. 3 is a graph showing the relationship between discharge capacity and the number of charge-discharge cycles in Example 1 and Comparative Example 1; and
FIG. 4 is a graph showing the relationship between relative resistance values and thicknesses of intermediate layers in solid-state batteries of Example 1, Example 2, and Comparative Example 1.

### DETAILED DESCRIPTION

An embodiment that is an example of the present disclosure will be described below. These descriptions and Examples are intended to exemplify the embodiment and are not intended to limit the scope of the present disclosure.

In the present disclosure, a numerical range expressed using "to" means a range including the numerical values appearing before and after the "to" as a lower limit and an upper limit, respectively.

Regarding numerical ranges that are progressively described in the present disclosure, the upper limit or the lower limit described in one numerical range may be replaced with the upper limit or the lower limit of another progressively described numerical range. Furthermore, regarding numerical ranges described in the present disclosure, the upper limits or the lower limits of those numerical ranges may be replaced with values described in the Examples.

In the present disclosure, when there are more than one substances that correspond to a component of interest in a composition, the amount of the component in the composition means the total amount of those plural substances in the composition unless otherwise specified.

In the present disclosure, combinations of two or more preferred aspects are more preferred aspects.

Regarding descriptions of groups (atomic groups) in the present disclosure, descriptions without an indication of "substituted" and "unsubstituted" encompass groups that do not have a substituent as well as groups that have a substituent.

In the present disclosure, the scope of the term "layer" includes cases where, when a region in which the layer is present is observed, the layer is formed on the entire region and also cases where the layer is formed only on part of the region.

In the present disclosure, the scope of the term "step" includes not only an independent step but also a step that cannot be clearly distinguished from another step as long as the intended object of the step is achieved.

### -Solid-state Battery-

The solid-state battery according to the present disclosure is a solid-state battery including an electrode, the electrode including:
a resin current collector including a resin and a conductive material;
an active material layer including an active material; and
an intermediate layer disposed between the active material layer and the resin current collector and in which at least one component included in the active material layer and at least one component included in the resin current collector are present in a mixed state.

According to the present disclosure, a deterioration in cycle characteristics (e.g., capacity retention rate after 50 cycles) is curbed. The mechanism of action is not always clear, but we surmise that the mechanism is as follows.

The electrode of the solid-state battery according to the present disclosure includes the intermediate layer between the resin current collector and the active material layer. In the intermediate layer, at least one component included in the active material layer and at least one component included in the resin current collector are present in a mixed state, so the intermediate layer has high affinity for both the resin current collector and the active material layer and has an anchoring effect due to admixing of the various components included in the intermediate layer. We surmise that, as a result, delamination of the active material layer from the resin current collector accompanying expansion and contraction of the active material layer during driving of the battery is curbed and a deterioration in cycle characteristics is curbed.

Hereinafter, the "electrode including a resin current collector including a resin and a conductive material, an active material layer including an active material, and an intermediate layer disposed between the active material layer and the resin current collector and in which at least one component included in the active material layer and at least one component included in the resin current collector are present in a mixed state" will be called "the specific electrode."

The scope of the solid-state battery according to the present disclosure includes what is called an all-solid-state battery which uses a solid-state electrolyte as the electrolyte, and the solid-state electrolyte may include an electrolyte solution in an amount that is less than 10% by mass relative to the total amount of the electrolyte. It will be noted that the solid-state electrolyte may be a composite solid-state electrolyte including an inorganic solid-state electrolyte and a polymer electrolyte.

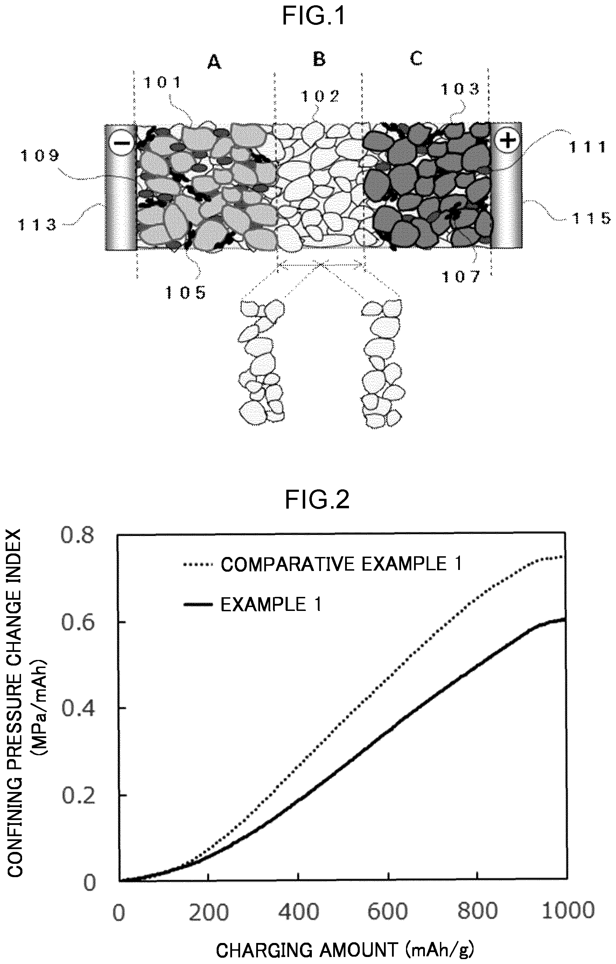

An example of the solid-state battery according to the present disclosure will now be described with reference to the drawings. FIG. 1 is a schematic cross-sectional view showing an example of the solid-state battery according to the present disclosure. The solid-state battery shown in FIG. 1 includes a negative electrode including a negative electrode current collector 113 and a negative electrode active material layer A, a solid-state electrolyte layer B, and a positive electrode including a positive electrode current collector 115 and a positive electrode active material layer C. The negative electrode active material layer A includes a negative electrode active material 101, a conductive aid 105, a binder 109, and a solid-state electrolyte 102. The positive electrode active material layer C includes a positive electrode active material 103, a conductive aid 107, a binder 111, and the solid-state electrolyte 102. The solid-state electrolyte layer B may be a single layer or have a two-layer structure.

The solid-state battery shown in FIG. 1 includes the specific electrode as at least one of the negative electrode or the positive electrode. When the negative electrode is configured to be the specific electrode, the negative electrode current collector 113 is a resin current collector including a resin and a conductive material. When the positive electrode is configured to be the specific electrode, the positive electrode current collector 115 is a resin current collector including a resin and a conductive material.

When a set of the positive electrode, the solid-state electrolyte layer, and the negative electrode serves as a power generation unit, the solid-state battery may include just one power generation unit or may have two or more power generation units. When the solid-state battery includes two or more power generation units, the power generation units may be connected in series or may be connected in parallel.

When the solid-state battery has two or more power generation units (i.e., when the solid-state battery is a stacked-cell battery), at least one positive electrode or negative electrode is configured to be the specific electrode. From the standpoint of further curbing a deterioration in cycle characteristics, the electrode positioned between respective units in the stacked structure (e.g., in the case of monopolar structure, the portion represented by "positive electrode active material layer / current collector / positive electrode active material layer" and/or the "negative electrode active material layer / current collector / negative electrode active material layer" in a stacked-cell battery including the layered structure of "negative electrode active material layer / current collector / negative electrode active material layer / solid-state electrolyte layer / positive electrode active material layer / current collector / positive electrode active material layer", and in the case of a bipolar structure, the portion represented by "positive electrode active material layer / current collector" and/or the "current collector / negative electrode active material layer" in a stacked-cell battery including the layered structure of "negative electrode active material layer / current collector / positive electrode active material layer / solid-state electrolyte layer / negative electrode active material layer / current collector / positive electrode active material layer") is preferably configured to be the specific electrode, and it is preferable that the electrodes in all the power generation units are each configured to be the specific electrode.

In the solid-state battery, layer-stack edges (i.e., side faces) of the stacked structure of positive electrode / solid-state electrolyte layer / negative electrode layer may be sealed with a sealing material such as resin. The negative electrode current collector 113 and the positive electrode current collector 115 may each be configured to have a buffer layer, an elastic layer, or a positive temperature coefficient (PTC) thermistor layer disposed on an outer peripheral surface thereof.

The shape of the solid-state battery is not particularly limited, and the solid-state battery may for example be a coin-type, a cylindrical-type, a prismatic-type, a sheet-type, a button-type, a flat-type, or a stacked-type.

### <Specific Electrode>

The specific electrode is an electrode that includes (i) a resin current collector including a resin and a conductive material, (ii) an active material layer including an active material, and (iii) an intermediate layer disposed between the active material layer and the resin current collector and in which at least one component included in the active material layer and at least one component included in the resin current collector are present in a mixed state.

The solid-state battery according to the present disclosure includes the specific electrode as at least one of a negative electrode or a positive electrode. In the solid-state battery according to the present disclosure, it is preferable that at least a negative electrode is configured to be the specific electrode, and it is more preferable that each of a negative electrode and a positive electrode is configured to be the specific electrode, from the standpoint of further curbing a deterioration in cycle characteristics for example.

### [Resin Current Collector]

The resin current collector includes a resin and a conductive material.

Examples of the resin include known thermoplastic resins such as poly(meth)acrylic acid, polymethyl (meth)acrylate, polyethylene, polypropylene, polyethylene terephthalate, polyether nitrile, polyimide, polyamide, polytetrafluoroethylene, polyacrylonitrile, poly(meth)acrylate, and halogenated vinyl resin; thermosetting resins such as epoxy resins, vinyl ester resins, unsaturated polyester resins, phenolic resins, and melamine resin; and known electrically conductive polymers such as polyaniline, polypyrrole, polythiophene, polyacetylene, polyparaphenylene, polyphenylene vinylene, polyacrylonitrile, and polyoxadiazole. One resin may be used singly, or two or more resins may be used in combination.

Among the above, from the standpoint of further curbing a deterioration in cycle characteristics due to delamination of the active material layer from the resin current collector, the resin preferably includes at least one of a thermoplastic resin or an electrically conductive polymer, more preferably includes a thermoplastic resin, and even more preferably includes one resin selected from the group consisting of polymethyl (meth)acrylate, poly(meth)acrylic acid, and polyacrylonitrile.

In the present disclosure, "(meth)acrylic acid" is a concept encompassing both acrylic acid and methacrylic acid, and "(meth)acrylate" is a concept encompassing both acrylates and methacrylates.

The resin may be a crystalline resin, an amorphous resin, or a mixture of both, and is preferably an amorphous resin from the standpoint of enhancing strength and further curbing a deterioration in cycle characteristics due to delamination of the active material layer from the resin current collector. It will be noted that the "crystallinity" of a resin refers to having an endothermic peak with a half-width of 10 °C or less when measured at a heating rate of 10 (°C/min) in differential scanning calorimetry (DSC). The "amorphousness" of a resin means that the half-width exceeds 10 °C or that no clear endothermic peak is observed.

The softening temperature of the resin varies with each resin, but from the standpoint of the strength of the resin current collector and the standpoint of curbing degradation of the active material for example, the softening temperature of the resin is preferably equal to or lower than the crystallization temperature of the solid-state electrolyte included in the solid-state electrolyte layer described later. It will be noted that the softening temperature of the resin is found by a DSC curve obtained by differential scanning calorimetry (DSC).

Examples of the conductive material include carbon materials, electrically conductive polymers, and metal particles. One conductive material may be used singly, or two or more conductive materials may be used in combination.

Examples of carbon materials include particulate carbon materials and fibrous carbon materials. Examples of particulate carbon materials include acetylene black (AB) and Ketjenblack (KB). Examples of fibrous carbon materials include carbon nanotubes (CNT), carbon nanofibers (CNF), and vapor-grown carbon fibers (VGCF).

Examples of electrically conductive polymers include polythiophene, polyacetylene, polyparaphenylene, and polyisothianaphthene.

Examples of metal particles include nickel, copper, iron, and stainless steel particles.

Among the above, from the standpoint of enhancing the anchoring effect and further curbing a deterioration in cycle characteristics due to delamination of the active material layer from the resin current collector, the conductive material preferably includes a carbon material, more preferably at least one of acetylene black (AB) or vapor-grown carbon fiber (VGCF), and even more preferably includes vapor-grown carbon fiber (VGCF).

The content of the conductive material is preferably from 10% by mass to 50% by mass, more preferably from 15% by mass to 43% by mass, and even more preferably from 15% by mass to 35% by mass relative to the total solid content of the resin current collector.

The coefficient of linear thermal expansion of the resin current collector is, from the standpoint of further curbing a deterioration in cycle characteristics due to delamination of the active material layer from the resin current collector, preferably from 100×10⁻⁶ ppm/K to 500×10⁻⁶ ppm/K, more preferably from 200×10⁻⁶ ppm/K to 430×10⁻⁶ ppm/K, and even more preferably from 230×10⁻⁶ ppm/K to 350×10⁻⁶ ppm/K. The value of the coefficient of linear thermal expansion is a value as measured by a method compliant with JIS H 7404-1993.

The method used for providing a coefficient of linear thermal expansion of the resin current collector that is in the above range is not particularly limited, and examples thereof include a method that uses the aforementioned preferred resins for the resin in the resin current collector.

The thickness of the resin current collector is not particularly limited, but for example from the standpoint of further curbing a deterioration in cycle characteristics due to delamination of the intermediate layer and the active material layer from the resin current collector, the thickness of the resin current collector is preferably from 5 µm to 80 µm, more preferably from 10 µm to 50 µm, and even more preferably from 10 µm to 30 µm.

The thickness of the resin current collector is determined as follows. a layer-stack cross-section of the resin current collector cut in the thickness direction is observed using a scanning electron microscope (SEM) equipped with an energy dispersive X-ray spectrometer (EDX), the thickness values are measured at ten freely-selected points in the cross-section, and the average value of the thickness values at the ten points is taken as the thickness of the resin current collector.

The method used for forming the resin current collector is not particularly limited, and examples thereof include: when the resin is a thermoplastic resin, a method including applying a coating liquid including the resin and the conductive material and drying the coating liquid, to form the resin current collector; and, when the resin is a thermosetting resin, a method including placing raw materials such as a resin precursor or a monomer along with the conductive material in a mold, followed by curing by heating.

The resin current collector may further include other materials in addition to the resin and the conductive material. Examples of those other materials include a binder and a metal powder material.

### [Active Material Layer]

The active material layer includes an active material. Since preferred aspects of the active material differ depending on whether the active material is used in a negative electrode or a positive electrode, they will be described under the respective sections for the negative electrode and the positive electrode provided below.

The active material may include a Si-based active material.

Si-based active materials are useful active materials having excellent charge-discharge characteristics. However, Si-based active materials tend to undergo significant expansion and contraction in accompaniment with charging-discharging, so owing to this, the active material layer tends to delaminate from the current collector and cycle characteristics also tend to become lower. However, as mentioned above, the solid-state battery according to the present disclosure includes the intermediate layer that is disposed between the resin current collector and the active material layer in the electrode, so a deterioration in cycle characteristics due to delamination of the active material layer from the resin current collector is also curbed. This effect is more conspicuous when the active material includes a Si-based active material.

The Si-based active material is not particularly limited as long as it is a material that includes silicon and can act as an active material, and examples thereof include silicon simple substance particles, silicon alloy particles (e.g., alloys of Si and one or more metals selected from the group consisting of Sn, Ti, Fe, Ni, Cu, Co, and Al), porous silicon, silicon clathrate compounds, silicon oxides, and mixtures of these. One Si-based active material may be used singly, or two or more Si-based active materials may be used in combination.

The thickness of the active material layer is not particularly limited, but for example from the standpoint of imparting more excellent charge-discharge characteristics and the standpoint of further curbing a deterioration in cycle characteristics due to delamination of the active material layer from the resin current collector, the thickness of the active material layer is preferably from 0.1 µm to 100.0 µm, more preferably from 1.0 µm to 100.0 µm, and still more preferably from 30.0 µm to 100.0 µm.

The thickness of the active material layer is determined as follows. a layer-stack cross-section of the active material layer cut in the thickness direction is observed using a scanning electron microscope (SEM) equipped with an energy dispersive X-ray spectrometer (EDX), thickness values are measured at ten freely-selected points in the cross-section, and the average value of the thickness values at the ten points is taken as the thickness of the active material layer.

### [Intermediate Layer]

The intermediate layer is a layer in which at least one component included in the active material layer and at least one component included in the resin current collector are present in a mixed state.

The intermediate layer is preferably a layer in which at least the active material included in the active material layer and the resin included in the resin current collector are present in a mixed state, from the standpoint of enhancing the anchoring effect and further reducing delamination of the active material layer from the resin current collector.

From the standpoint of enhancing the anchoring effect and further reducing delamination of the active material layer from the resin current collector, the ratio of the thickness of the intermediate layer to the thickness of the resin current collector (intermediate layer / resin current collector) is preferably from 1.0/30.0 to 1.0/4.0, more preferably from 1.0/20.0 to 1.0/5.0, and even more preferably from 1.0/10.0 to 1.0/6.0.

The thickness of the intermediate layer is not particularly limited, but for example from the standpoint of imparting more excellent charge-discharge characteristics and further curbing a deterioration in cycle characteristics due to delamination of the active material layer from the resin current collector, the thickness of the intermediate layer is preferably from 0.1 µm to 15.0 µm, more preferably from 0.4 µm to 10.0 µm, and even more preferably from 0.6 µm to 8.0 µm.

The thickness of the intermediate layer is determined as follows. A layer-stack cross-section of the intermediate layer cut in the thickness direction is observed using a scanning electron microscope (SEM) equipped with an energy dispersive X-ray spectrometer (EDX), thickness values are measured at ten freely-selected points in the cross-section, and the average value of the thickness values at the ten points is taken as the thickness of the intermediate layer.

The components included in the intermediate layer can be checked by an EDX analysis on the chemical composition of a layer-stack cross-section of the intermediate layer cut in the thickness direction, using a scanning electron microscope (SEM) equipped with an energy dispersive X-ray spectrometer (EDX) to perform .

The method used for forming the intermediate layer is not particularly limited, and examples thereof include: (1) when the resin in the resin current collector is a thermoplastic resin, a method including heating, to a temperature equal to or higher than the softening temperature of the thermoplastic resin, a layer stack in which the resin current collector including the thermoplastic resin and a conductive material and the active material layer including the active material are stacked and pressing the layer stack, to form the intermediate layer; and, (2) when the resin in the resin current collector is a thermosetting resin, a method including filling a mold with a precursor of the thermosetting resin and components of the active material layer such as the active material and the binder, followed by heating, to form the intermediate layer.

Below, elements configuring the solid-state battery, such as a negative electrode, a positive electrode, and a solid-state electrolyte layer, will be described in detail.

### <Negative Electrode>

The negative electrode is a layer having a negative electrode current collector and a negative electrode active material layer that is provided on the negative electrode current collector and includes a negative electrode active material.

When the negative electrode is configured to be the specific electrode, the negative electrode current collector corresponds to the resin current collector, and an intermediate layer in which at least one component included in the active material layer and at least one component included in the resin current collector are present in a mixed state is disposed between the active material layer and the resin current collector.

When the negative electrode is not the specific electrode, examples of materials for the negative electrode current collector include stainless steel, copper, nickel, and carbon. Examples of the shape of the negative electrode current collector include foil and mesh.

Examples of negative electrode active materials include carbon materials such as graphite, hard carbon, soft carbon, and carbon nanotubes, and Si-based active materials.

The negative electrode active material layer may, as needed, further contain a solid-state electrolyte and a binder in addition to the negative electrode active material.

Examples of solid-state electrolytes include the same ones as those exemplified as solid-state electrolytes that can be included in the solid-state electrolyte layer.

Examples of binders include rubber binders and fluoride binders. Examples of rubber binders include butadiene rubber, hydrogenated butadiene rubber, styrene butadiene rubber (SBR), hydrogenated styrene butadiene rubber, nitrile butadiene rubber, hydrogenated nitrile butadiene rubber, and ethylene propylene rubber. Examples of fluoride binders include polyvinylidene fluoride (PVDF), the copolymer poly(vinylidene fluoride-co-hexafluoropropylene) (PVDF-HFP), polytetrafluoroethylene, and fluoro-rubber.

In the negative electrode, the mass ratio of the negative electrode active material to the solid-state electrolyte (negative electrode active material / solid-state electrolyte ) is not particularly limited, but for example is preferably from 30/70 to 85/15 and more preferably from 40/60 to 80/20.

### <Positive Electrode>

The positive electrode is for example a layer including a positive electrode current collector and a positive electrode active material layer that is provided on the positive electrode current collector and includes a positive electrode active material.

When the positive electrode is configured to be the specific electrode, the positive electrode current collector corresponds to the resin current collector, and an intermediate layer in which at least one component included in the active material layer and at least one component included in the resin current collector are present in a mixed state is disposed between the active material layer and the resin current collector.

When the positive electrode is not the specific electrode, examples of materials for the positive electrode current collector include stainless steel, aluminum, nickel, iron, titanium, and carbon. Examples of the shape of the positive electrode current collector include foil and mesh.

The positive electrode active material preferably includes a lithium complex oxide. The lithium complex oxide may contain at least one selected from the group consisting of F, Cl, N, S, Br, and I. Furthermore, the lithium complex oxide may have a crystalline structure belonging to at least one space group selected from the space groups R-3m, Immm, and P63-mmc (also called P63mc or P6/mmc). Furthermore, the main array of the transition metal, oxygen, and lithium in the lithium complex oxide may have an O2-type structure.

Examples of lithium complex oxides having a crystalline structure belonging to R-3m include compounds represented by LiₓMe_{y}O_{α}X_{β} (where Me represents at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, X represents at least one selected from the group consisting of F, Cl, N, S, Br, and I, and x, y, α, and β satisfy 0.5 ≤ x ≤ 1.5, 0.5 ≤ y ≤ 1.0, 1 ≤ α < 2, and 0 < β ≤ 1).

Examples of lithium complex oxides having a crystalline structure belonging to Immm include complex oxides represented by Liₓ₁M¹A¹₂ (where x1 satisfies 1.5 ≤ x1 ≤ 2.3, M¹ includes at least one selected from the group consisting of Ni, Co, Mn, Cu, and Fe, A¹ includes at least oxygen, and the proportion of oxygen in A¹ is 85 at%) (a specific example is Li₂NiO₂) and complex oxides represented by Liₓ₁M^{1A}₁₋ₓ₂M^{1B}ₓ₂O_{2-y}A²_{y} (where 0 ≤ x2 ≤ 0.5 and 0 ≤ y ≤ 0.3 and at least one of x2 or y is not 0, M^{1A} represents at least one selected from the group consisting of Ni, Co, Mn, Cu, and Fe, M^{1B} represents at least one selected from the group consisting of Al, Mg, Sc, Ti, Cr, V, Zn, Ga, Zr, Mo, Nb, Ta, and W, and A2 represents at least one selected from the group consisting of F, Cl, Br, S, and P).

Examples of lithium complex oxides having a crystalline structure belonging to P63-mmc include complex oxides represented by MlₓM2_{y}O₂ (where M1 represents an alkali metal (preferably at least one of Na or K), M2 represents a transition metal (preferably at least one selected from the group consisting of Mn, Ni, Co, and Fe), and x + y satisfies 0 < x + y ≤ 2).

Examples of lithium complex oxides having an O2 structure include complex oxides represented by Liₓ[Li_{α}(MnₐCo_{b}M_{c})_{1-α}]O₂ (where 0.5 < x < 1.1, 0.1 < α < 0.33, 0.17 < a < 0.93, 0.03 < b < 0.50, 0.04 < c < 0.33, and M represents at least one selected from the group consisting of Ni, Mg, Ti, Fe, Sn, Zr, Nb, Mo, W, and Bi), and specific examples thereof include Li_{0.744}[Li_{0.145}Mn_{0.625}Co_{0.115}Ni_{0.115}]O₂.

Furthermore, the positive electrode preferably includes, in addition to the positive electrode active material, a solid-state electrolyte selected from the group consisting of sulfide solid-state electrolytes, oxide solid-state electrolytes, and halide solid-state electrolytes, and it is more preferable that at least part of the surface of the positive electrode active material be coated with a sulfide solid-state electrolyte, an oxide solid-state electrolyte, or a halide solid-state electrolyte. As the halide solid-state electrolyte coating at least part of the surface of the positive electrode active material, Li_{6-(4-x)b}(Ti₁₋ₓAlₓ)_{b}F₆ (0 < x < 1 and 0 < b ≤ 1.5) [LTAF electrolyte] is preferred.

The positive electrode may, as needed, further contain a solid-state electrolyte and a binder in addition to the positive electrode active material.

It is preferred that the solid-state electrolyte include for example at least one solid-state electrolyte selected from the group consisting of a sulfide solid-state electrolyte, an oxide solid-state electrolyte, and a halide solid-state electrolyte.

The positive electrode preferably has a configuration in which at least part of the surface of the positive electrode active material is coated with a sulfide solid-state electrolyte, an oxide solid-state electrolyte, or a halide solid-state electrolyte. As the halide solid-state electrolyte coating at least part of the surface of the positive electrode active material, Li_{6-(4-x)b}(Ti₁₋ₓAlₓ)_{b}F₆ (0 < x < 1 and 0 < b ≤ 1.5) [LTAF electrolyte] is preferred.

Examples of binders include the same ones as those exemplified as binders that can be included in the negative electrode.

In the positive electrode, the mass ratio of the positive electrode active material to the solid-state electrolyte (positive electrode active material / solid-state electrolyte) is not particularly limited, but for example is preferably from 30/70 to 90/10, more preferably from 30/70 to 85/15, and still more preferably from 50/50 to 80/20.

### <Solid-state Electrolyte Layer>

The solid-state electrolyte layer includes a solid-state electrolyte.

The solid-state electrolyte preferably includes, from the standpoint of battery performance, at least one solid-state electrolyte species selected from the group consisting of a sulfide solid-state electrolyte, an oxide solid-state electrolyte, and a halide solid-state electrolyte, and more preferably includes a sulfide solid-state electrolyte.

The sulfide solid-state electrolyte preferably contains sulfur (S) as the main anion element, and, in addition to S, preferably also contains for example a Li element and an element A. The element A is at least one selected from the group consisting of P, As, Sb, Si, Ge, Sn, B, Al, Ga, and In. The sulfide solid-state electrolyte may further contain at least one of O or a halogen element. Examples of the halogen element (X) include F, Cl, Br, and I. The composition of the sulfide solid-state electrolyte is not particularly limited, and examples thereof include xLi₂S·(100-x)P₂S₅ (70 ≤ x ≤ 80) and yLiI·zLiBr·(100-y-z)(xLi₂S·(1-x)P₂S₅) (0.7 ≤ x ≤ 0.8, 0 ≤ y ≤ 30, 0 ≤ z ≤ 30). The sulfide solid-state electrolyte may have the composition represented by the following Formula (1).

Formula (1): Li₄₋ₓGe₁₋ₓPₓS₄ (0 < x < 1)

In Formula (1), at least part of Ge may be substituted with at least one selected from the group consisting of Sb, Si, Sn, B, Al, Ga, In, Ti, Zr, V, and Nb. Furthermore, at least part of P may be substituted with at least one selected from the group consisting of Sb, Si, Sn, B, Al, Ga, In, Ti, Zr, V, and Nb. Part of Li may be substituted with at least one selected from the group consisting of Na, K, Mg, Ca, and Zn. Part of S may be substituted with a halogen. The halogen is at least one of F, Cl, Br, or I.

The oxide solid-state electrolyte preferably contains oxygen (O) as the main anion element, and may for example contain Li, an element Q (Q represents at least one of Nb, B, Al, Si, P, Ti, Zr, Mo, W, or S), and O. Examples of oxide solid-state electrolytes include gamet-type solid-state electrolytes, perovskite-type solid-state electrolytes, NASICON-type solid-state electrolytes, Li-P-O-based solid-state electrolytes, and Li-B-O-based solid-state electrolytes. Example of garnet-type solid-state electrolytes include Li₇La₃Zr₂O₁₂, Li₇₋ₓLa₃(Zr₂₋ₓNbₓ)O₁₂ (0 ≤ x ≤ 2), and Li₅La₃Nb₂O₁₂. Examples of perovskite-type solid-state electrolytes include (Li, La)TiO₃, (Li, La)NbO₃, and (Li, Sr)(Ta, Zr)O₃. Examples of NASICON-type solid-state electrolytes include Li(Al, Ti)(PO₄)₃ and Li(Al, Ga)(PO₄)₃. Examples of Li-P-O-based solid-state electrolytes include Li₃PO₄ and LIPON (a compound in which part of O in Li₃PO₄ is substituted with N), and examples of Li-B-O-based solid-state electrolytes include Li₃BO₃ and compounds obtained by replacing part of O in Li₃BO₃ by C.

As the halide solid-state electrolyte, a solid-state electrolyte including Li, M, and X (M represents at least one of Ti, Al, or Y, and X represents F, Cl, or Br) is preferred. Specifically, Li_{6-3z}Y_{z}X₆ (X represents Cl or Br, and z satisfies 0 < z < 2) and Li_{6-(4-x)b}(Ti₁₋ₓAlₓ)_{b}F₆ (0 < x < 1, 0 < b ≤ 1.5) are preferred. Among Li_{6-3z}Y_{z}X₆, in terms of having excellent lithium ion conductivity, Li₃YX₆ (X represents Cl or Br) is more preferred, and Li₃YCl₆ is even more preferred. Furthermore, it is preferred that Li_{6-(4-x)b}(Ti₁₋ₓAlₓ)_{b}F₆ (0 < x < 1, 0 < b ≤ 1.5) be included together with a solid-state electrolyte such as a sulfide solid-state electrolyte from for example the standpoint of inhibiting oxidative decomposition of the sulfide solid-state electrolyte.

The crystallization degree of the solid-state electrolyte varies with the solid-state electrolyte that is employed, but for example is preferably from 0% to 90%, more preferably from 20% to 85%, and even more preferably from 50% to 85%. It will be noted that the crystallinity of the solid-state electrolyte is a value as measured by X-ray diffraction.

### <Exterior Casing>

The solid-state battery may further include an exterior casing. The exterior casing houses at least the aforementioned power generation unit(s). Examples of the exterior casing include a laminate-type exterior casing and a case-type exterior casing.

### <Confining Member>

The solid-state battery may further include a confining member. The confining member applies confining pressure in the thickness direction to the positive electrode, the solid-state electrolyte layer, and the negative electrode. The confining pressure is preferably 0.1 MPa or higher, more preferably 1 MPa or higher, and even more preferably 5 MPa or higher. The confining pressure is preferably 100 MPa or lower, more preferably 50 MPa or lower, and even more preferably 20 MPa or lower. The confining pressure is preferably from 0.1 MPa to 100 MPa.

### <Applications>

The solid-state battery according to the present disclosure is a typical solid-state secondary battery (more preferably, a solid-state lithium-ion secondary battery). Examples of applications of the solid-state battery include power sources for vehicles, electronic devices, and electricity storages. Examples of vehicles include four-wheeled electric vehicles, two-wheeled electric vehicles, gasoline automobiles, and diesel automobiles. Examples of four-wheeled electric vehicles include battery electric vehicles (BEV), plug-in hybrid electric vehicles (PHEV), and hybrid electric vehicles (HEV). Examples of two-wheeled electric vehicles include electric bikes and pedal-assist electric bicycles. Examples of electronic devices include handheld devices (e.g., smartphones, tablet computers, audio players, etc.), portable devices (e.g., notebook computers, compact disc (CD) players, etc.), and movable devices (e.g., electric tools, professional video cameras, etc.). Among these, the solid-state battery according to the present disclosure is preferably applied as a power source for driving a hybrid electric vehicle, a plug-in hybrid electric vehicle, or a battery electric vehicle.

### -Method of Manufacturing Solid-state Battery-

The method of manufacturing a solid-state battery according to the present disclosure includes a step of preparing an electrode by pressing a stacked body, in which a resin current collector including a thermoplastic resin and a conductive material and an active material layer including an active material are stacked, at a temperature equal to or higher than the softening temperature of the thermoplastic resin.

In the method of manufacturing a solid-state battery according to the present disclosure, by pressing the stacked body at a temperature equal to or higher than the softening temperature of the thermoplastic resin, the active material layer eats into the region of the resin current collector where the thermoplastic resin is softened, thereby forming an intermediate layer in which at least one component included in the active material layer and at least one component included in the resin current collector are present in a mixed state, between the active material layer and the resin current collector. The intermediate layer has high affinity for both the resin current collector and the active material layer, and the various components included in the intermediate layer exert an anchoring effect. We surmise that, as a result, delamination of the active material layer from the resin current collector accompanying expansion and contraction of the active material layer during driving of the battery is curbed and a deterioration in cycle characteristics is curbed.

The method of manufacturing a solid-state battery according to the present disclosure may for example be a manufacturing method including a step of preparing an electrode by pressing a stacked body, in which a resin current collector including a thermoplastic resin and a conductive material and an active material layer including an active material are stacked, at a temperature equal to or higher than the softening temperature of the thermoplastic resin (hereinafter also called an "electrode preparation step") and a step of stacking the electrode, which is at least one of a positive electrode or a negative electrode, and a solid-state electrolyte layer to obtain a solid-state battery (hereinafter also called a "stacking step").

### <Electrode Preparation Step>

In the electrode preparation step, an electrode is prepared by pressing a stacked body, in which a resin current collector including a thermoplastic resin and a conductive material and an active material layer including an active material are stacked, at a temperature equal to or higher than the softening temperature of the thermoplastic resin.

Preferred aspects of the resin current collector including the thermoplastic resin and the conductive material are the same as the preferred aspects thereof described in the foregoing section for the solid-state battery. Preferred aspects of the active material layer including the active material are the same as the preferred aspects thereof described in the foregoing section for the solid-state battery.

The softening temperature of the thermoplastic resin varies with the thermoplastic resin that is used, but may for example be from 100 °C to 200 °C, from 110 °C to 190 °C, or from 130 °C to 180 °C.

The heating temperature of the stacked body is equal to or higher than the softening temperature of the thermoplastic resin and, from the standpoint of battery performance and the standpoint of more efficiently creating the intermediate layer, is preferably equal to or higher than the softening temperature of the thermoplastic resin and equal to or lower than the softening temperature + 100 °C, preferably equal to or higher than the softening temperature and equal to or lower than the softening temperature + 90 °C, more preferably equal to or higher than the softening temperature and equal to or lower than the softening temperature + 80 °C, and even more preferably equal to or higher than the softening temperature and equal to or lower than the softening temperature + 75 °C.

The method used for pressing the stacked body is not particularly limited. The pressing method may include pressing the stacked body after the stacked body has been preheated at a temperature equal to or higher than the softening temperature of the thermoplastic resin (i.e., the heating and the pressing may be carried out in separate steps) or may include pressing the stacked body while the stacked body is heated at a temperature equal to or higher than the softening temperature of the thermoplastic resin (i.e., the heating and the pressing may be carried out simultaneously). The method used for pressing the stacked body is, from the standpoint of manufacturing efficiency, preferably a method in which the stacked body is pressed while the stacked body is heated at a temperature equal to or higher than the softening temperature of the thermoplastic resin.

Examples of the pressing method include roll pressing and cold isostatic pressing (CIP). The pressing pressure is not particularly limited as long as it is of an extent whereby the active material layer eats into the resin current collector so that the intermediate layer can be formed, and may be from 1 kN/cm to 100 kN/cm, from 5 kN/cm to 80 kN/cm, or from 10 kN/cm to 70 kN/cm.

### <Stacking Step>

In the stacking step, the electrode, which is at least one of a positive electrode or a negative electrode, and the solid-state electrolyte layer are stacked to obtain a solid-state battery.

The electrode prepared by the above electrode preparation step is employed for either one of a positive electrode or a negative electrode. From the standpoint of further curbing a deterioration in cycle characteristics for example, the electrode prepared by the above electrode preparation step is preferably provided as a negative electrode, and more preferably provided as each of a negative electrode and a positive electrode, .

Preferred aspects of the solid-state electrolyte layer are the same as the preferred aspects thereof described in the section for the solid-state battery. Known methods can be applied for the method of stacking the electrode and the solid-state electrolyte layer.

### <Other Steps>

The method of manufacturing a solid-state battery according to the present disclosure may further include other steps in addition to the electrode preparation step and the stacking step. Examples of other steps include a step of initially charging the solid-state battery; a step of making the solid-state battery into a bipolar solid-state battery; a step of processing the solid-state battery to a predetermined size by cutting or punching; and a step of stacking two or more of the solid-state battery.

### EXAMPLES

### <Example 1>

### [Preparation of Positive Electrode]

A positive electrode slurry was prepared by using an ultrasonic dispersing device to stir a positive electrode mix including an NCA positive electrode active material (LiNi_{0.8}Co_{0.15}Al_{0.05}O₂), a sulfide-based solid-state electrolyte (Li₂S-P₂S₅), a conductive material (VGCF), a PVDF-based binder, and butyl butyrate as raw materials. Here, the mass ratio of the NCA positive electrode active material : the sulfide-based solid-state electrolyte : the vapor-grown carbon fiber : the PVDF-based binder in the positive electrode slurry was adjusted to 88.2 : 9.8 : 1.3 : 0.7. The positive electrode slurry was coated by a blade coating method onto an Al foil and a SUS foil, and these were dried at 100 °C on a hot plate for 30 minutes to obtain two positive electrodes having a positive electrode active material layer.

### [Preparation of Negative Electrode]

A negative electrode slurry was prepared by using an ultrasonic dispersing device to stir a negative electrode mix including powder Si particles, a sulfide-based solid-state electrolyte (Li₂S-P₂S₅), a conductive material (VGCF), a PVDF-based binder, and butyl butyrate as raw materials. Here, the mass ratio of the powder Si particles : the sulfide-based solid-state electrolyte : the carbon material: the PVDF-based binder in the negative electrode slurry was adjusted to 100 : 77.6 : 2 : 15. The negative electrode slurry was coated by a blade coating method onto a Ni foil and a SUS foil, and these were dried at 100 °C on a hot plate for 30 minutes to obtain two negative electrodes having a negative electrode active material layer.

### [Preparation of Solid-state Electrolyte Layer]

A solid-state electrolyte slurry was prepared by using an ultrasonic dispersing device to stir a solid-state electrolyte mix including a sulfide-based solid-state electrolyte (Li₂S-P₂S₅), a PVDF-based binder, and butyl butyrate as raw materials. Here, the mass ratio of the sulfide-based solid-state electrolyte : the PVDF-based binder in the solid-state electrolyte slurry was adjusted to 99.4 : 0.4. The solid-state electrolyte slurry was coated by a blade coating method onto the positive electrode active material layers of the two positive electrodes prepared as described above to obtain a layer stack of the solid-state electrolyte layer / the positive electrode active material layer / the Al foil (i.e., solid-state electrolyte layer / positive electrode) and a layer stack of the solid-state electrolyte layer / the positive electrode active material layer / the SUS foil (i.e., solid-state electrolyte layer / positive electrode).

### [Preparation of Resin Current Collector]

A conductive paste obtained by mixing a conductive material of the type and amount shown in Table 1, polymethyl methacrylate (amorphous resin) as a resin, and butyl butyrate was coated by a blade coating method onto a PET film and dried at 150 °C for 30 minutes, and then the PET film was peeled away to obtain a resin current collector. It will be noted that the glass transition temperature (i.e., the softening temperature) of the resin was equal to or lower than the crystallization temperature of the solid-state electrolyte.

### [Preparation of Stacked Body]

The two types of positive electrodes / solid-state electrolyte layer and the two types of negative electrodes prepared as described above were layered in the following combinations to obtain two sub-stacked bodies.
- Ni foil / negative electrode active material layer / solid-state electrolyte layer / positive electrode active material layer / SUS foil
- SUS foil / negative electrode active material layer / solid-state electrolyte layer / positive electrode active material layer / Al foil

Next, the two sub-stacked bodies were pressed in a roll press machine at a pressing pressure of 50 kN/cm and a temperature of 160 °C. Then, the SUS foils were peeled away from the sub-stacked bodies, and the resin current collector was disposed between the sub-stacked bodies, from which the SUS foils had been peeled away, and incorporated into the stack structure, to obtain a stacked body having a "Ni foil / negative electrode active material layer / solid-state electrolyte layer / positive electrode active material layer / resin current collector / negative electrode active material layer / solid-state electrolyte layer / positive electrode active material layer / Al foil" layer-stack structure. Thereafter, this stacked body was pressed in a roll press machine at a pressing pressure of 20 kN/cm and a temperature of 160 °C. Next, the stacked body was punched to a size of 1 cm² to obtain a solid-state battery having a "Ni foil / negative electrode active material layer / solid-state electrolyte layer / positive electrode active material layer / intermediate layer / resin current collector / intermediate layer / negative electrode active material layer / solid-state electrolyte layer / positive electrode active material layer / Al foil" layer-stack structure.

### <Example 2 to Example 7>

Resin current collectors were obtained using the same specifications as in Example 1 except that in the preparation of the resin current collectors the amount of the resin and the type and amount of the conductive material were set to the specifications shown in Table 1.

Solid-state batteries were obtained using the same specifications as in Example 1 except that the obtained resin current collectors were used.

### <Comparative Example 1>

### [Preparation of Positive Electrode]

A positive electrode slurry was prepared by using an ultrasonic dispersing device to stir a positive electrode mix including an NCA positive electrode active material (LiNi_{0.8}Co_{0.15}Al_{0.05}O₂), a sulfide-based solid-state electrolyte (Li₂S-P₂S₅), a conductive material (VGCF), a PVDF-based binder, and butyl butyrate as raw materials. Here, the mass ratio of the NCA positive electrode active material : the sulfide-based solid-state electrolyte : the vapor-grown carbon fiber : the PVDF-based binder in the positive electrode slurry was adjusted to 88.2 : 9.8 : 1.3 : 0.7. The positive electrode slurry was coated by a blade coating method onto an Al foil, and this was dried at 100 °C on a hot plate for 30 minutes to obtain one positive electrode having a positive electrode active material layer.

### [Preparation of Negative Electrode]

A negative electrode slurry was prepared by using an ultrasonic dispersing device to stir a negative electrode mix including powder Si particles, a sulfide-based solid-state electrolyte (Li₂S-P₂S₅), a conductive material (VGCF), a PVDF-based binder, and butyl butyrate as raw materials. Here, the mass ratio of the powder Si particles : the sulfide-based solid-state electrolyte : the carbon material : the PVDF-based binder in the negative electrode slurry was adjusted to 100 : 77.6 : 2 : 15. The negative electrode slurry was coated by a blade coating method onto a Ni foil, and this was dried at 100 °C on a hot plate for 30 minutes to obtain one negative electrode having a negative electrode active material layer.

### [Preparation of Solid-state Electrolyte Layer]

A solid-state electrolyte slurry was prepared by using an ultrasonic dispersing device to stir a solid-state electrolyte mix including a sulfide-based solid-state electrolyte (Li₂S-P₂S₅), a PVDF-based binder, and butyl butyrate as raw materials. Here, the mass ratio of the sulfide-based solid-state electrolyte : the PVDF-based binder in the solid-state electrolyte slurry was adjusted to 99.4 : 0.4. The solid-state electrolyte slurry was coated by a blade coating method onto the positive electrode active material layer of the positive electrode prepared as described above to obtain a layer stack of the solid-state electrolyte layer / the positive electrode active material layer / the Al foil (i.e., solid-state electrolyte layer / positive electrode).

### [Preparation of Stacked Body]

The one type of positive electrode / solid-state electrolyte layer and the one type of negative electrode prepared as described above were layered in the following combination to obtain one stacked body.
- Ni foil / negative electrode active material layer / solid-state electrolyte layer / positive electrode active material layer / Al foil

Next, the stacked body was pressed in a roll press machine at a pressing pressure of 50 kN/cm and a temperature of 160 °C. Next, the stacked body was punched to a size of 1 cm² to obtain a solid-state battery having a "Ni foil / negative electrode active material layer / solid-state electrolyte layer / positive electrode active material layer / Al foil" layer-stack structure.

### <Comparative Example 2>

A solid-state battery was obtained using the same specifications as in Example 1 except that, in the preparation of the stacked body, the stacked body was pressed in a roll press machine at a pressing pressure of 20 kN/cm and at 25 °C without heating the stacked body.

### <Comparative Example 3>

A solid-state battery was obtained using the same specifications as in Example 1 except that, in the preparation of the stacked body, the temperature when heating and pressing the stacked body (called "pressing temperature" in Table 1) was set to the temperature shown in Table 1 (i.e., a temperature lower than the softening temperature of polymethyl methacrylate).

The thicknesses of the active material layers, the intermediate layers, and the resin current collector in the "positive electrode active material layer / intermediate layer / resin current collector / intermediate layer / negative electrode active material layer" layer-stuck structure of each of the solid-state batteries of the Examples and Comparative Examples were measured by the method described above. The results are shown in Table 1. It was found out that the solid-state batteries of Comparative Example 2 and Comparative Example 3 did not have intermediate layers, as a result of measurement according to the method described above.

In Table 1, the column for "Thickness Ratio (Intermediate Layer / Resin Current Collector)" refers to the ratio of the thickness of the intermediate layer to the thickness of the resin current collector (intermediate layer / resin current collector).

### <Evaluation of Confining Pressure at Charging>

Each of the solid-state batteries of Example 1 and Comparative Example 1 was sandwiched between two confining plates, and the two confining plates were tightened with a fastener at a confining pressure of 5 MPa to fix the distance between the two confining plates. Next, the confined stacked bodies were charged with a constant current of 1/10 C to 8.10 V and thereafter charged with a constant voltage of 8.10 V to a final current of 1/100 C. The confining pressures before the start of charging and at the end of charging were recorded. Values obtained by dividing the absolute value of the difference (P_{BEFORE} - P_{AFTER}) between the confining pressure P_{BEFORE} before the start of charging and the confining pressure P_{AFTER} at the end of charging by the discharge capacity were used as confining pressure change indices. The larger the confining pressure change index is, the larger the expansion of the solid-state battery accompanying charging is.

FIG. 2 is a graph showing the relationship between the confining pressure change indices and the charging amounts in Example 1 and Comparative Example 1. As shown in FIG. 2, change in the confining pressure accompanying charging was reduced in the solid-state battery of Example 1 compared with the solid-state battery of Comparative Example 1.

### <Evaluation of Discharge Capacity>

Using a galvanostat, a charge-discharge test was implemented for 50 cycles under the conditions of a current of 0.1 C, an end-of-charge voltage of 8.10 V, and an end-of-discharge voltage of 5.0 V Each cycle starts with charging, and after one charging process was completed, the discharge capacity in each cycle was calculated by determining the amount of current generated during discharge to 5.0 V and dividing the amount of current by the weight of the active material used for the measurement. Then, the discharge capacity in the 50th cycle was divided by the discharge capacity in the first cycle to obtain the capacity retention rate (%) after 50 cycles. The results are shown in Table 1.

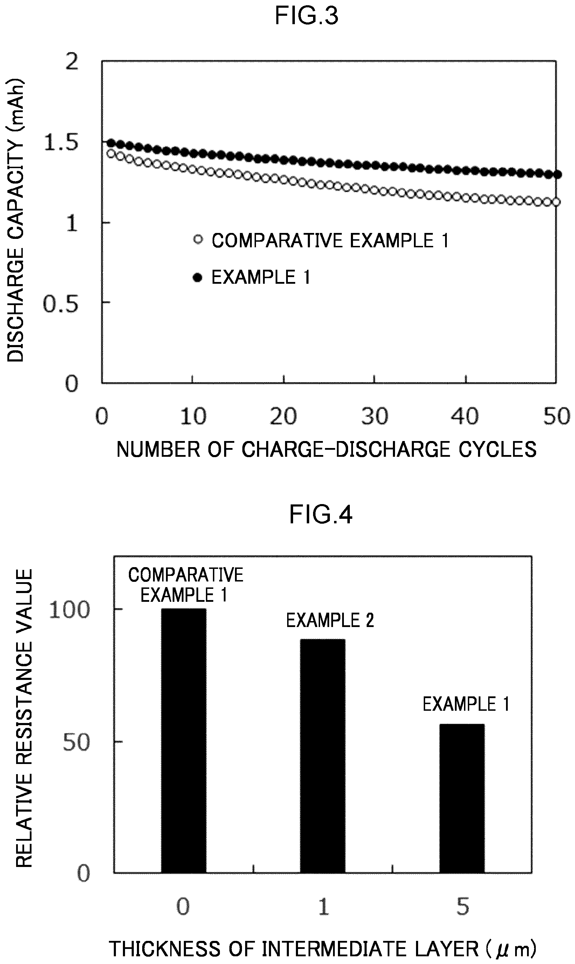

FIG. 3 is a graph showing the relationship between the discharge capacity and the number of charge-discharge cycles in Example 1 and Comparative Example 1. As shown in FIG. 3, it was found that, compared with the solid-state battery of Comparative Example 1, the solid-state battery of Example 1 had an excellent capacity retention rate, that is, a deterioration in cycle characteristics was curbed.

### <Evaluation of Resistance Values>

Each of the solid-state batteries of Example 1, Example 2, and Comparative Example 1 was sandwiched between two confining plates, and the two confining plates were tightened with a fastener at a confining pressure of 5 MPa to fix the distance between the two confining plates. Next, the confined stacked bodies were charged with a constant current of 1/10 C to 8.10 V and thereafter charged with a constant voltage of 8.10 V to a final current of 1/100 C. Moreover, the stacked bodies were discharged with a constant current of 1/10 C to 5.0 V and thereafter discharged with a constant voltage of 5.0 V to a final current of 1/100 C. Then, resistance values were calculated by dividing the absolute value of the difference between the voltage before charging and the voltage at 0.1 seconds after discharging by a current corresponding to 1/100 C. The obtained resistance values are shown in FIG. 4 as relative values relative to the resistance value of the solid-state battery of Comparative Example 1.

FIG. 4 is a graph showing the relationship between the relative resistance values and the thicknesses of the intermediate layers in the solid-state batteries of Example 1, Example 2, and Comparative Example 1. As shown in FIG. 4, it was found that, compared with the solid-state battery of Comparative Example 1, an increase in the resistance value due to delamination of the active material layer from the current collector was curbed in the solid-state batteries of the Examples.

**Table 1**

| | Resin Current Collector | | | | | | | | Press Temperature (°C) | Capacity Retention Rate (%) |
|---|---|---|---|---|---|---|---|---|---|---|
| | Type and Amount of Conductive Material (parts by mass) | | Amount of Resin (parts by mass) | Amount of Conductive Material relative to Current Collector (% by mass) | Thickness of Intermediate Layer (µm) | | Thickness Ratio (Intermediate Layer/Resin Current Collector) | Linear Thermal Expansion Coefficient (ppm/K) | | |
| | VGCF | AB | | | Between Positive Electrode Active Material Layer and Resin Current Collector | Between Resin Current Collector and Negative Electrode Active Material Layer | | | | |
| Example 1 | 4 | 0 | 16 | 20 | 2.4 | 2.6 | 1.0/6.0 | 300×10⁻⁶ | 160 | 86 |
| Example 2 | 4 | 0 | 16 | 20 | 0.4 | 0.6 | 1.0/30.0 | 300×10⁻⁶ | 120 | 81 |
| Example 3 | 4 | 0.6 | 16 | 22 | 2.2 | 2.3 | 1.0/6.0 | 285×10⁻⁶ | 160 | 93 |
| Example 4 | 4 | 1.2 | 16 | 25 | 2.1 | 2 | 1.0/6.8 | 270×10⁻⁶ | 160 | 84 |
| Example 5 | 4 | 1.8 | 16 | 27 | 1.8 | 2 | 1.0/7.1 | 250×10⁻⁶ | 160 | 83 |
| Example 6 | 4 | 2.4 | 16 | 29 | 1.5 | 1.7 | 1.0/8.0 | 240×10⁻⁶ | 160 | 82 |
| Example 7 | 0 | 4 | 16 | 20 | 2 | 2.3 | 1.0/6.1 | 300×10⁻⁶ | 160 | 84 |
| Comparative Example 1 | 0 | 0 | 0 | | - | - | - | - | 160 | 79 |
| Comparative Example 2 | 4 | 0 | 16 | 20 | - | - | - | 300×10⁻⁶ | 25 | 45 |
| Comparative Example 3 | 4 | 0 | 16 | 20 | - | - | - | 300×10⁻⁶ | 60 | 52 |

As shown in Table 1, it was found that, compared with the solid-state batteries of the Comparative Examples, the solid-state batteries of the Examples had an excellent capacity retention rate, that is, a deterioration in cycle characteristics was curbed.

## Claims

1. A solid-state battery, comprising an electrode, the electrode comprising:
a resin current collector including a resin and a conductive material,
an active material layer including an active material, and
an intermediate layer disposed between the active material layer and the resin current collector and in which at least one component included in the active material layer and at least one component included in the resin current collector are present in a mixed state.

2. The solid-state battery according to claim 1, wherein a thickness of the intermediate layer relative to a thickness of the resin current collector (intermediate layer / resin current collector) is from 1/30 to 1/6.

3. The solid-state battery according to claim 1 or claim 2, wherein the active material includes an Si-based active material.

4. The solid-state battery according to any one of claims 1 to 3, wherein a coefficient of linear thermal expansion of the resin current collector is from 200×10⁻⁶ ppm/K to 350×10⁻⁶ ppm/K.

5. The solid-state battery according to any one of claims 1 to 4, further comprising a solid-state electrolyte layer including a solid-state electrolyte, wherein a softening temperature of the resin is equal to or lower than a crystallization temperature of the solid-state electrolyte.

6. The solid-state battery according to any one of claims 1 to 5, wherein the conductive material includes vapor-grown carbon fiber (VGCF).

7. A method of manufacturing a solid-state battery, the method comprising a step of preparing an electrode by pressing a stacked body, in which a resin current collector including a thermoplastic resin and a conductive material and an active material layer including an active material are stacked, at a temperature equal to or higher than a softening temperature of the thermoplastic resin.
